# EUROPEAN PATENT APPLICATION

(11) **EP 4 513 342 A1**
(43) Date of publication of application: **26.02.2025**
(21) Application number: 23802464.0
(22) Date of filing: 03.03.2023
(51) Int. Cl.: G06F 13/36

(54) **HARDWARE MANAGEMENT CARD AND RELATED PRODUCT**

(30) Priority: 10.05.2022 CN 202210504436
(71) Applicant: Huawei Cloud Computing Technologies Co., Ltd., Guiyang, Guizhou 550025 (CN)
(72) Inventor: PENG, Lin, Guiyang, Guizhou 550025 (CN)
(74) Representative: Thun, Clemens
(86) International application number: PCT/CN2023/079638
(87) International publication number: WO 2023/216688

(57) **Abstract**

This application provides a hardware management card and a related product. The hardware management card includes a communication interface and a management apparatus. The communication interface is configured to connect to a host system, and the hardware management card is a device independent of the host system. The management apparatus includes a first processor and a first memory. The first processor is configured to read program code in the first memory, to manage hardware in the host system. The hardware in the host system includes one or more of the following: a mainboard of the host system, hardware in the mainboard, and hardware that is in the host system and that is connected to the mainboard. This offloads a hardware management capability from the host system to the hardware management card, to reduce overheads of the host system and reduce costs of the host system.

## Description

This application claims priority to Chinese Patent Application No. 202210504436.9, filed with the China National Intellectual Property Administration on May 10, 2022 and entitled "HARDWARE MANAGEMENT CARD AND RELATED PRODUCT", which is incorporated herein by reference in its entirety.

### TECHNICAL FIELD

This application relates to the field of cloud computing technologies, and in particular, to a hardware management card and a related product.

### BACKGROUND

With development of cloud computing technologies, a higher requirement is imposed on performance of a computing device. Therefore, related performance of the computing device on a management and control plane and a data plane is usually offloaded to another device (referred to as an "offload card" below), for example, an inference card or an accelerator card.

Currently, the computing device usually manages the offload card as an independent and complete device. The management method of the computing device is mainly as follows: A baseboard management controller (baseboard management controller, BMC) deployed on a host side manages the offload card. In the method, the BMC has a limited capability of managing the offload card. For example, the BMC cannot manage and control problems such as fault monitoring and version updating on the offload card. In addition, in the computing device, the BMC and the offload card execute different roots of trust. This increases trusted management complexity of the computing device.

Therefore, for the computing device configured with the offload card, how to reduce management difficulty of the computing device is still an urgent problem to be resolved.

### SUMMARY

This application provides a hardware management card and a related product, to offload a hardware management capability from a host system to the hardware management card, so as to reduce overheads of the host system and reduce costs of the host system. In other words, for a computing device configured with the hardware management card, management difficulty of the computing device can be reduced by using technical solutions provided in this application.

According to a first aspect, this application provides a hardware management card. The hardware management card includes a communication interface and a management apparatus. The communication interface is configured to connect to a host system, and the hardware management card is a device independent of the host system. The management apparatus includes a first processor and a first memory. The first processor is configured to read program code in the first memory, to manage hardware in the host system. The hardware in the host system includes one or more of the following: a mainboard of the host system, hardware (for example, a processor, a memory, a basic input/output system (basic input/output system, BIOS) chip, an input/output (input/output, I/O) control chip, a communication interface, and a bus) in the mainboard, and hardware (for example, a power supply, a hard disk, a CD-ROM drive, a fan, a chassis, a communication interface, and a bus) that is connected to the mainboard and that is in the host system. This is equivalent to offloading a hardware management capability in the host system to the hardware management card, to reduce overheads of the host system and reduce costs of the host system. In addition, the hardware management card provided in this application manages the hardware in the host system as a part of the hardware management card, so that the hardware management card can more comprehensively manage the host system connected to the hardware management card.

In a possible implementation of the first aspect, the management apparatus is further configured to manage hardware in the hardware management card, where the hardware in the hardware management card includes one or more of the following: the communication interface configured to connect to the host system, a second processor, a second memory, and a network interface card. That is, the management apparatus can further manage the hardware in the hardware management card.

In a possible implementation of the first aspect, the second processor is configured to read program code in the second memory, to implement a function offloaded from the host system to the hardware management card, where the function implemented by the second processor does not include a function associated with management of the hardware in the host system and the hardware in the hardware management card. Optionally, the function implemented by the second processor may include a computing function, a network function, a storage function, a virtual machine management function, or the like. In other words, in addition to a function of managing the hardware in the host system, the hardware management card may further have a function similar to that of an accelerator card, an inference card, a network interface card, or a storage card.

In a possible implementation of the first aspect, the management apparatus stores a root of trust, and the root of trust is used to perform trusted management (including trusted measurement and trusted boot) on program code executed by the host system and program code executed by the hardware management card. In this way, it can be ensured that a computing device configured with the hardware management card uses a unique root of trust to perform the trusted management. This reduces difficulty of the trusted management on the computing device.

According to a second aspect, this application provides a host system. The host system includes a first communication interface and a conversion control apparatus. The first communication interface is configured to connect to a hardware management card, and the hardware management card is a device independent of the host system. The conversion control apparatus is configured to offload, from the host system to the hardware management card, a function associated with management of hardware in the host system. The hardware in the host system includes one or more of the following: a mainboard of the host system, hardware (for example, a processor, a memory, a BIOS chip, an I/O control chip, a communication interface, and a bus) in the mainboard, and hardware (for example, a power supply, a hard disk, a CD-ROM drive, a fan, a chassis, a communication interface, and a bus) that is connected to the mainboard and that is in the host system. This can reduce overheads of the host system and reduce costs of the host system.

In a possible implementation of the second aspect, the conversion control apparatus includes at least one second communication interface and a third communication interface, the at least one second communication interface is connected to the hardware in the host system, the at least one second communication interface is configured to collect status information of the hardware in the host system, the third communication interface is connected to the first communication interface, and the third communication interface is configured to send the status information of the hardware in the host system to the hardware management card through the first communication interface.

In another possible implementation of the second aspect, the conversion control apparatus includes a processor and a memory, and the processor is configured to: read program code in the memory, collect the status information of the hardware in the host system, and send the status information of the hardware in the host system to the hardware management card.

In this way, the hardware management card can indirectly access a plurality of pieces of hardware in the host system, and manage the plurality of pieces of hardware in the host system based on an access result. That is, any one of the foregoing implementations is implemented, so that the hardware management card may manage the plurality of pieces of hardware in the host system as a part of the hardware management card, and the plurality of pieces of hardware in the host system are managed more comprehensively.

According to a third aspect, this application provides a computing device. The computing device includes the hardware management card described in any one of the first aspect and the implementations of the first aspect, and the host system described in any one of the second aspect and the implementations of the second aspect. The hardware management card is a device independent of the host system. The host system is configured to offload, from the host system to the hardware management card, a function associated with management of hardware in the host system. The hardware in the host system includes one or more of the following: a mainboard of the host system, hardware (for example, a processor, a memory, a BIOS chip, an I/O control chip, a communication interface, and a bus) in the mainboard, and hardware (for example, a power supply, a hard disk, a CD-ROM drive, a fan, a chassis, a communication interface, and a bus) that is connected to the mainboard and that is in the host system. The hardware management card is configured to manage the hardware in the host system. In addition, the hardware management card may be further configured to manage local hardware. In this way, in the computing device, the hardware management card has a hardware management capability, that is, the hardware management card can completely and comprehensively manage the hardware in the host system and the hardware in the hardware management card. In addition, the computing device performs trusted management by using a unique root of trust. This reduces management difficulty of the computing device. In addition, a management capability of the hardware in the host system is offloaded to the hardware management card. This can reduce overheads of the host system in the computing device.

According to a fourth aspect, this application provides a management method of a computing device. The method is applied to the hardware management card described in any one of the first aspect and the implementations of the first aspect. The method includes: obtaining status information of hardware that is in a host system and that is connected to the hardware management card, where the hardware management card is a device independent of the host system, and the hardware in the host system includes one or more of the following: a mainboard of the host system, hardware (for example, a processor, a memory, a BIOS chip, an I/O control chip, a communication interface, and a bus) in the mainboard, and hardware (for example, a power supply, a hard disk, a CD-ROM drive, a fan, a chassis, a communication interface, and a bus) that is connected to the mainboard and that is in the host system; and managing the hardware in the host system based on the status information of the hardware in the host system. This can reduce overheads of the host system and reduce costs of the host system.

According to a fifth aspect, this application provides a computer-readable storage medium. The computer storage medium stores computer program code. When the computer program code is executed by a computing device, the computing device performs some or all of the method described in the fourth aspect.

### BRIEF DESCRIPTION OF DRAWINGS

FIG. 1 is a diagram of a structure of a computing device according to an embodiment of this application;
FIG. 2 is a diagram of a structure of a computing device cluster according to an embodiment of this application;
FIG. 3 is a diagram of a structure of a hardware management card according to an embodiment of this application;
FIG. 4 is a diagram of an implementation in which a hardware management card accesses a plurality of pieces of hardware in a host system according to an embodiment of this application;
FIG. 5 is a diagram of a structure of a host system according to an embodiment of this application;
FIG. 6 is a schematic flowchart of a management method of a computing device according to an embodiment of this application;
FIG. 7 is a diagram of a structure of another computing device according to an embodiment of this application;
FIG. 8 is a diagram of a structure of another computing device cluster according to an embodiment of this application;
FIG. 9 is a diagram of a structure of another hardware management card according to an embodiment of this application;
FIG. 10 is a diagram of a structure of another host system according to an embodiment of this application;
FIG. 11 is a diagram of an implementation in which a host system accesses a plurality of pieces of hardware on a hardware management card according to an embodiment of this application; and
FIG. 12 is a schematic flowchart of another management method of a computing device according to an embodiment of this application.

### DESCRIPTION OF EMBODIMENTS

To make the technical solutions provided in this application clearer, some terms and related technologies in the following embodiments of this application are first explained and described before specific description.

With development of a cloud computing technology, a cloud service is widely used. To meet an increased demand of a customer for the cloud service, a higher requirement is also imposed by a cloud service provider on performance of a computing device deployed on a cloud. Currently, a hardware management card technology is usually used to implement this requirement, that is, related performance (such as computing performance, storage performance, network performance, or virtual machine management performance) of the computing device on a management and control plane and a data plane is offloaded to a corresponding device (that is, an offload card). The offloading means to transfer the performance to a dedicated processing unit for implementation, and the offload card is a processing unit that implements the offloading function. Specific forms of the offload card are various, for example, a storage card configured to implement storage performance, a network interface card configured to implement network performance, an accelerator card configured to implement acceleration processing performance, an inference card configured to implement artificial intelligence (artificial intelligence, AI) computing, or the like. Therefore, existence of the offload card can reduce overheads of the computing device, and improve related performance.

Generally, the computing device is configured with a BMC. The BMC is an independent system, and does not depend on an operating system of the computing device, or may not depend on other hardware (for example, a processor, a memory, and a fan) in the computing device. The BMC is configured to manage the computing device. For example, the BMC may be configured to monitor a status of a parameter such as a temperature or a voltage of each piece of hardware of the computing device in real time, or may be configured to adjust a fan rotation speed in real time based on a temperature status of each piece of hardware to ensure that a temperature of the computing device is within an appropriate range, to control overall power consumption not to be excessively high. After the computing device is configured with the offload card, because the offload card is also a complete and independent system, at least three systems exist in the computing device: a host system, the BMC, and the offload card. It should be noted that in embodiments of this application, to facilitate distinguishing between computing devices before and after the offload card is configured, the computing device before the offload card is configured is referred to as a "host system", and the computing device after the offload card is configured is referred to as a "computing device" for short. In this case, if the computing device manages the offload card by using a conventional technology, the offload card cannot be comprehensively managed and controlled, and management logic is complex. This increases management difficulty.

For the foregoing problems, an embodiment of this application provides a hardware management card. The hardware management card may be understood as an offload card, and has a function of managing a host system. For a computing device configured with the hardware management card, the hardware management card can reduce management difficulty of the computing device.

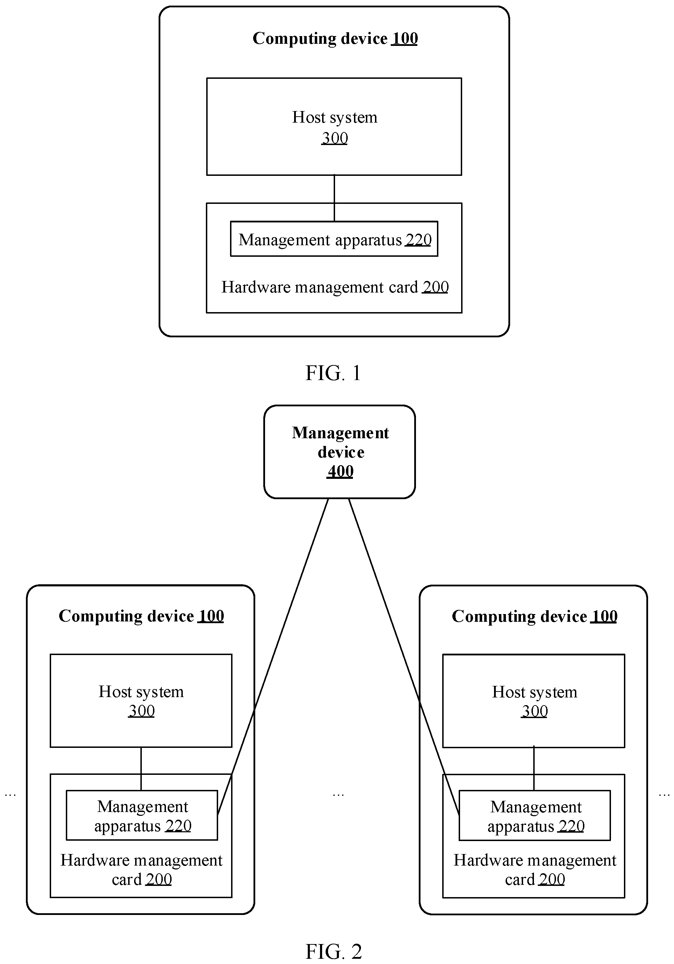

As shown in FIG. 1, a computing device 100 includes a hardware management card 200 and a host system 300. The hardware management card 200 is a device independent of the host system 300. A management apparatus 220 is configured in the hardware management card 200. The management apparatus 220 may manage the host system 300 as a part of the hardware management card 200, and may be specifically configured to manage hardware in the host system 300, for example, a mainboard of the host system 300, hardware (for example, a memory, a BIOS chip, and an I/O control chip) in the mainboard, and hardware (for example, a power supply, a hard disk, and a fan) that is connected to the mainboard and that is in the host system 300. In addition, software in the host system 300 may be further managed based on the hardware in the host system 300.

In this embodiment of this application, the computing device 100 may be a computing device in a cloud data center, a computing device in an edge data center, or a terminal computing device. The cloud data center includes a large quantity of basic resources (including computing resources, storage resources, and network resources) owned by the cloud service provider, and the computing resources included in the cloud data center may be a large quantity of computing devices, for example, servers. The edge data center includes a large quantity of edge computing devices close to the terminal computing device, and the edge computing device includes an edge server, an edge small cell having a computing capability, and the like. The terminal computing device includes a terminal server, a notebook computer, a personal desktop computer, an intelligent camera, and the like.

Further, the computing device 100 may alternatively be a computing device in a computing device cluster. As shown in FIG. 2, the computing device cluster includes a plurality of computing devices 100 shown in FIG. 1 and a management device 400. The management device 400 may communicate with the plurality of computing devices 100, and the management device 400 manages each computing device 100 by using the management apparatus 220 on each computing device 100. In this way, management efficiency of the computing device cluster can be improved, and refined and high-accuracy management of the computing device 100 in the cluster can be implemented.

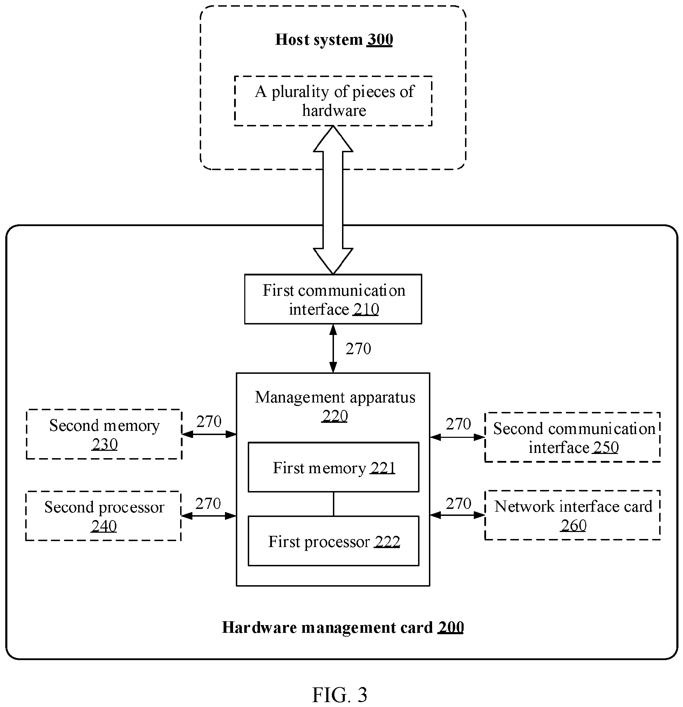

With reference to FIG. 3 to FIG. 6, the following describes in detail how the hardware management card 200 provided in this embodiment of this application manages the host system 300, so that management difficulty of the computing device 100 can be reduced.

FIG. 3 is an example of a diagram of a structure of the hardware management card 200. As shown in FIG. 3, the hardware management card 200 includes at least one first communication interface 210 and the management apparatus 220.

The at least one first communication interface 210 is configured to connect to the host system 300. The at least one first communication interface 210 uses an apparatus such as but not limited to a transceiver, for example, a wired communication interface and a wireless communication interface. The wired communication interface may be an Ethernet interface. The Ethernet interface may be an optical interface, an electrical interface, or a combination thereof. The wireless communication interface may be a wireless local area network (wireless local area network, WLAN) interface, a cellular network communication interface, or a combination thereof.

Optionally, to implement high efficiency of communication between the hardware management card 200 and the host system 300, the at least one first communication interface 210 may include a peripheral component interconnect express (peripheral component interconnect express, PCIe) interface and a compute express link (compute express link, CXL) interface, or another customized interface specially configured to implement the communication between the hardware management card 200 and the host system 300.

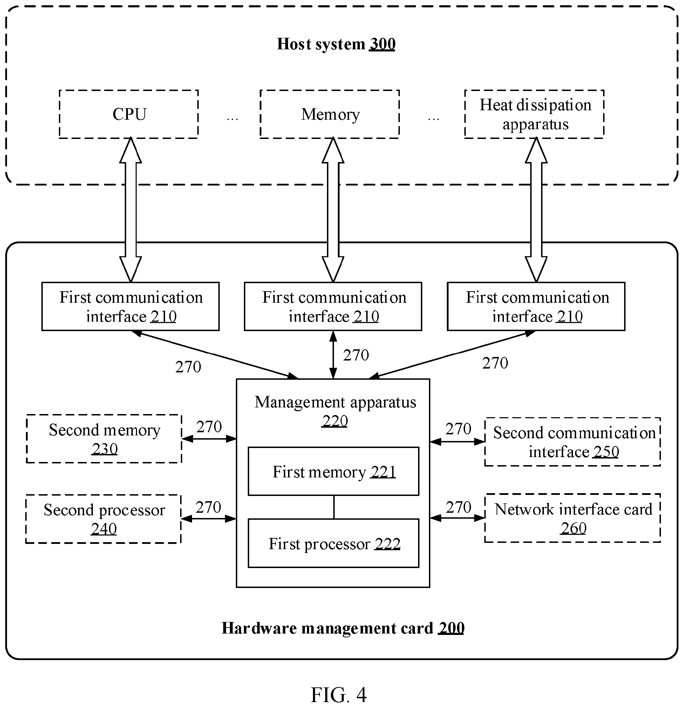

The management apparatus 220 is configured to manage the host system 300, may specifically manage the hardware in the host system 300, and may further manage the software in the host system 300. The hardware in the host system 300 (for details, refer to FIG. 4 below) includes but is not limited to one or more of the following: a mainboard, hardware in the mainboard, and hardware that is in the host system and that is connected to the mainboard 300. The hardware in the mainboard of the host system 300 includes a central processing unit (central processing unit, CPU), a memory, a BIOS chip, an I/O control chip, a communication interface, a bus, and the like. The hardware that is in the host system and that is connected to the mainboard 300 includes a power supply, a hard disk, a CD-ROM drive, a heat dissipation apparatus (such as a fan), a chassis, a communication interface, a bus, and the like. The software in the host system 300 includes program code, for example, an operating system and an application, that runs in the host system 300.

Optionally, the management apparatus 220 is further configured to manage the hardware management card 200, may specifically manage hardware in the hardware management card 200, and may further manage software in the hardware management card 200. The hardware in the hardware management card 200 includes but is not limited to the at least one first communication interface 210. The software in the hardware management card 200 includes other program code, for example, an operating system and an application, that runs in the hardware management card 200.

In some embodiments, the management apparatus 220 includes a first memory 221 and a first processor 222. The first memory 221 stores program code, and the first processor 222 is configured to read the program code in the first memory 221, to implement a function of the management apparatus 220.

Optionally, the first memory 221 may be a read-only memory (read-only memory, ROM) or another type of static storage device that can store static information and instructions, a random access memory (random access memory, RAM) or another type of dynamic storage device that can store information and instructions, a flash memory (flash memory) or an electrically erasable programmable read-only memory (electrically erasable programmable read-only memory, EEPROM), or a magnetic storage device such as a solid-state drive (solid-state drive, SSD), a hard disk drive (hard disk drive, HDD), or a compact disc read-only memory (compact disc read-only memory, CD-ROM). The first memory 221 may be connected to the first processor 222 through a bus, or may be integrated with the first processor 222. In addition to storing program code that needs to be executed by the first processor 222, the first memory 221 may be further configured to store data, for example, intermediate data or result data (for example, status information of a specific piece of hardware or software in the hardware management card 200, or status information of a specific piece of hardware or software in the host system 300) generated by the first processor 222 in an execution process.

Optionally, the first processor 222 may be a general-purpose CPU, a graphics processing unit (graphics processing unit, GPU), or a microprocessor, or may be one or more integrated circuits, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

In some embodiments, the management apparatus 220 may be a software apparatus, a hardware device, or a combination of a software apparatus and a hardware device. In a specific implementation, the management apparatus 220 may be a dedicated chip integrated into a mainboard of the hardware management card 200, and has an independent memory and an independent processor, that is, the first memory 221 and the first processor 222, for example, a BMC. Alternatively, the function of the management apparatus 220 is implemented by a CPU and a memory in the hardware management card 200, that is, the first processor 222 is the CPU, and the first memory 221 is the memory of the CPU.

In some embodiments, the management apparatus 220 stores a set of a root of trust, and the set of the root of trust is a segment of secure and reliable program code that is first executed after the management apparatus 220 is powered on. The root of trust in the management apparatus 220 is a unique root of trust used to perform trusted management (including trusted measurement and trusted boot) on the computing device 100.

Optionally, in addition to the at least one first communication interface 210 and the management apparatus 220, the hardware management card 200 may further include one or more pieces of the following hardware: a second memory 230, a second processor 240, a second communication interface 250, a network interface card 260, and a bus 270.

The second memory 230 may be an ROM or another type of static storage device that can store static information and instructions, an RAM or another type of dynamic storage device that can store information and instructions, an EEPROM or a flash memory, or a magnetic storage device such as an SSD, an HDD, or a CD-ROM. The second memory 230 may be connected to the second processor 240 through the bus 270, or the second memory 230 may be integrated with the second processor 240. The second memory 230 may be configured to store program code that needs to be executed by the second processor 240. The second memory 230 may be further configured to store data, for example, intermediate data or result data (such as service data) generated by the second processor 240 in an execution process.

The second processor 240 may be a single-core processor or a multi-core processor, and may be specifically a CPU, a GPU, or a microprocessor, or may be one or more integrated circuits, for example, an ASIC, a PLD, or a combination thereof. The PLD may be a CPLD, an FPGA, a GAL, or any combination thereof. The second processor 240 is configured to read the program code in the second memory 230, to implement a function offloaded from the host system 300 to the hardware management card 200. It should be noted that the function herein does not include a function associated with management of the hardware management card 200 and the host system 300, that is, the second processor 240 is not configured to implement the function of the management apparatus 220. In other words, the function implemented by the second processor 240 may include a computing function, a network function, a storage function, a virtual machine management function, or the like that is offloaded from the host system 300 to the hardware management card 200. In some embodiments, the host system 300 may offload the function to the hardware management card 200 through the at least one first communication interface 210.

The second communication interface 250 uses an apparatus such as but not limited to a transceiver, and is configured to communicate with another device (for example, the management device 400 and the network interface card 260 in FIG. 2) or a communication network. The second communication interface 250 may include a wired communication interface, or may further include a wireless communication interface. The wired communication interface may be, for example, an Ethernet interface. The Ethernet interface may be an optical interface, an electrical interface, or a combination thereof. The wireless communication interface may be a WLAN interface, a cellular network communication interface, or a combination thereof.

The network interface card 260 is configured to provide a network transmission capability for the hardware management card 200, so that the hardware management card 200 communicates with another device or a communication network by using a network. The network interface card 260 may include a wired network interface card, or may include a wireless network interface card. The network interface card 260 may be inserted into the hardware management card 200 through the second communication interface 250, or may be integrated into the hardware management card 200.

The bus 270 includes a path for transmitting information between the hardware in the hardware management card 200, for example, a bus between the second memory 230 and the second processor 240, a bus between the second processor 240 and the second communication interface 250, a bus between the first communication interface 210 and the network interface card 260, and a bus between the management apparatus 220 and each piece of the foregoing hardware. It should be understood that for brevity, FIG. 3 shows only the bus between the management apparatus 220 and each piece of hardware in the hardware management card 200, and does not show a bus between other hardware or in the hardware.

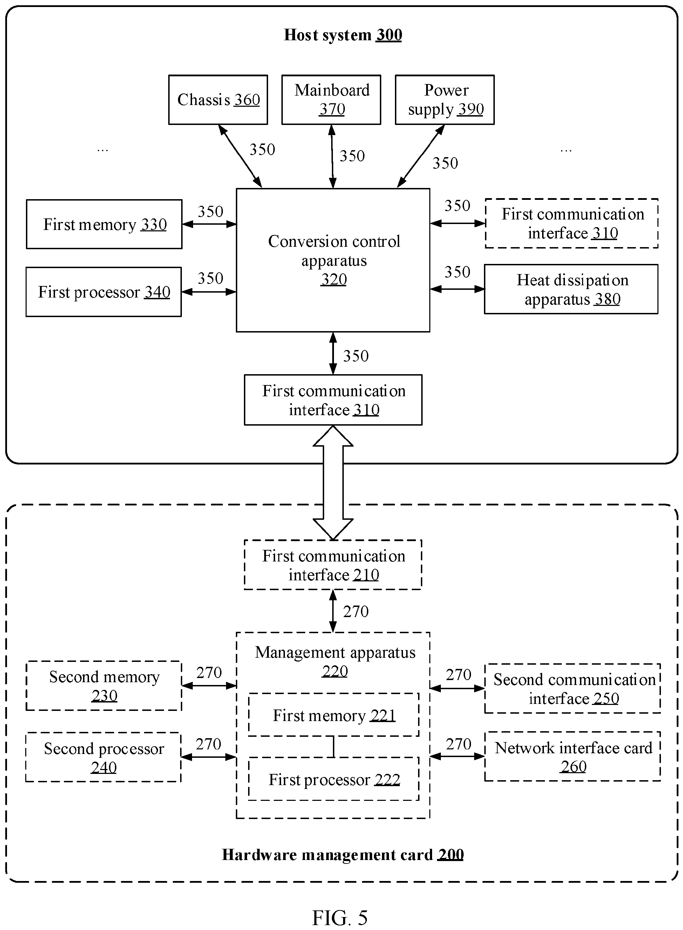

In this embodiment of this application, the hardware management card 200 may manage the host system 300 as a local component by using the management apparatus 220. In a possible implementation, as shown in FIG. 4, the hardware management card 200 includes a plurality of first communication interfaces 210, and the management apparatus 220 may be connected to a plurality of pieces of hardware in the host system 300 through the plurality of first communication interfaces 210. In this way, the management apparatus 220 can directly access the plurality of pieces of hardware in the host system 300, and the host system 300 is managed. It can be easily learned that in the manner described in FIG. 4, a plurality of communication interfaces in the hardware management card 200 need to be occupied, and a plurality of communication interfaces in the host system 300 also need to be occupied. Therefore, another possible implementation is further proposed in an embodiment of this application. The following describes the implementation with reference to FIG. 5.

FIG. 5 is an example of a diagram of a structure of a host system 300. As shown in FIG. 5, the host system 300 includes at least one first communication interface 310, a conversion control apparatus 320, a first memory 330, a first processor 340, and a bus 350. In addition, the host system 300 may further include but is not limited to one or more of the following: a chassis 360, a mainboard 370, a heat dissipation apparatus 380, and a power supply 390.

The at least one first communication interface 310 uses an apparatus such as but not limited to a transceiver, for example, a wired communication interface and a wireless communication interface. The wired communication interface may be an Ethernet interface. The Ethernet interface may be an optical interface, an electrical interface, or a combination thereof. The wireless communication interface may be a WLAN interface, a cellular network communication interface, or a combination thereof.

The at least one first communication interface 310 includes a communication interface configured to connect to the hardware management card 200. The host system 300 may offload, through the interface, some performance (such as management performance, storage performance, network performance, or computing performance) in the host system 300 to the hardware management card 200. In addition, as a communication interface for communicating with the hardware management card 200, the at least one first communication interface 310 should use a same communication protocol as the at least one first communication interface 210 corresponding to the hardware management card 200 side, that is, the at least one first communication interface 310 may include a PCIe interface, a CXL interface, or another customized interface specially configured to implement communication between the hardware management card 200 and the host system 300.

Optionally, the at least one first communication interface 310 further includes a communication interface connected to another peripheral device. For example, the host system 300 may further be connected to a network interface card. Therefore, the at least one first communication interface 310 may further include a communication interface connected to the network interface card.

The conversion control apparatus 320 is configured to offload, from the host system 300 to the hardware management card 200, a function (including at least one of a hardware management function of the host system 300 and a software management function of the host system 300) associated with managing the host system 300.

In some embodiments, the conversion control apparatus 320 may include at least one second communication interface and a third communication interface, for example, a hub controller (hub controller). The at least one second communication interface is connected to hardware in the host system 300, may be configured to collect status information of the hardware in the host system 300, and may also be configured to access the hardware in the host system 300 to collect status information of software in the host system 300. The third communication interface is connected to the at least one first communication interface 310, and is configured to send, to the hardware management card 200 through the at least one first communication interface 310, the status information that is in the host system 300 and that is collected by the at least one second communication interface. In a specific implementation, a specific communication interface in the host system 300 may be configured, so that the communication interface has a function of the conversion control apparatus 320.

In some other embodiments, the conversion control apparatus 320 includes a second processor and a second memory. The second memory stores program code, and the second processor is configured to read the program code in the second memory, to implement the function of the conversion control apparatus 320, that is, collecting status information of the host system 300, and sending the collected information to the hardware management card 200. In a specific implementation, the conversion control apparatus 320 may be a software apparatus, a hardware device, or a combination of a software apparatus and a hardware device. For example, the conversion control apparatus 320 may be a dedicated chip integrated into the mainboard 370, for example, a microprocessor (for example, a microcontroller unit (microcontroller unit, MCU)). Alternatively, the function of the conversion control apparatus 320 is implemented by a CPU and a memory in the host system 300, that is, the second processor in the conversion control apparatus 320 is the CPU in the host system 300, and the second memory is the memory of the CPU.

The first memory 330 may be an ROM or another type of static storage device that can store static information and instructions, an RAM or another type of dynamic storage device that can store information and instructions, an EEPROM or a flash memory, or a magnetic storage device such as an SSD, an HDD, or a CD-ROM. The first memory 330 may be connected to the first processor 340 through the bus 350, or the first memory 330 may be integrated with the first processor 340. The first memory 330 may store program code, for example, an operating system of the host system 300 and an application program running in the host system 300. When the program code stored in the first memory 330 is executed by the first processor 340, normal running of the host system 300 can be implemented. The first memory 330 may further store data, for example, intermediate data or result data, such as service data, generated by the first processor 340 in an execution process.

The first processor 340 may be a general-purpose CPU, a GPU, or a microprocessor, or may be one or more integrated circuits, for example, an ASIC, a PLD, or a combination thereof. The PLD may be a CPLD, an FPGA, a GAL, or any combination thereof. In some embodiments, the first processor 340 may be a single-core processor, or may be a multi-core processor.

The bus 350 includes a path for transmitting information between the hardware in the host system 300, for example, a bus between the first memory 330 and the first processor 340, a bus between the at least one first communication interface 310 and the first processor 340, and a bus between the conversion control apparatus 320 and each piece of hardware (including the at least one first communication interface 310, the first memory 330, the first processor 340, the bus 350, the chassis 360, the mainboard 370, the heat dissipation apparatus 380, the power supply 390, and the like) in the host system 300. It should be understood that for brevity, FIG. 5 shows only the bus between the conversion control apparatus 320 and each piece of hardware in the host system 300, and does not show a bus between the hardware or in the hardware.

For other hardware in the host system 300, the chassis 360 is a housing of the host system 300, and is configured to fasten each piece of hardware in the host system 300. The mainboard 370 is a body connected to each piece of hardware in the host system 300. The hardware in the mainboard 370 may include a CPU, a BIOS chip, an I/O control chip, a part of the first communication interface 310, a part of the bus 350, and the like. The heat dissipation apparatus 380 is a device, for example, a fan, configured to dissipate heat for high-temperature hardware in the host system 300. The power supply 390 is a power supply system of the host system 300, and is configured to supply power to and stabilize a voltage of the host system 300. Generally, the chassis 360, the heat dissipation apparatus 380, and the power supply 390 are hardware connected to the mainboard 370. It should be understood that FIG. 5 shows only some hardware in the host system 300. During actual application, the host system 300 may further include other hardware, for example, a CD-ROM drive or a network interface card.

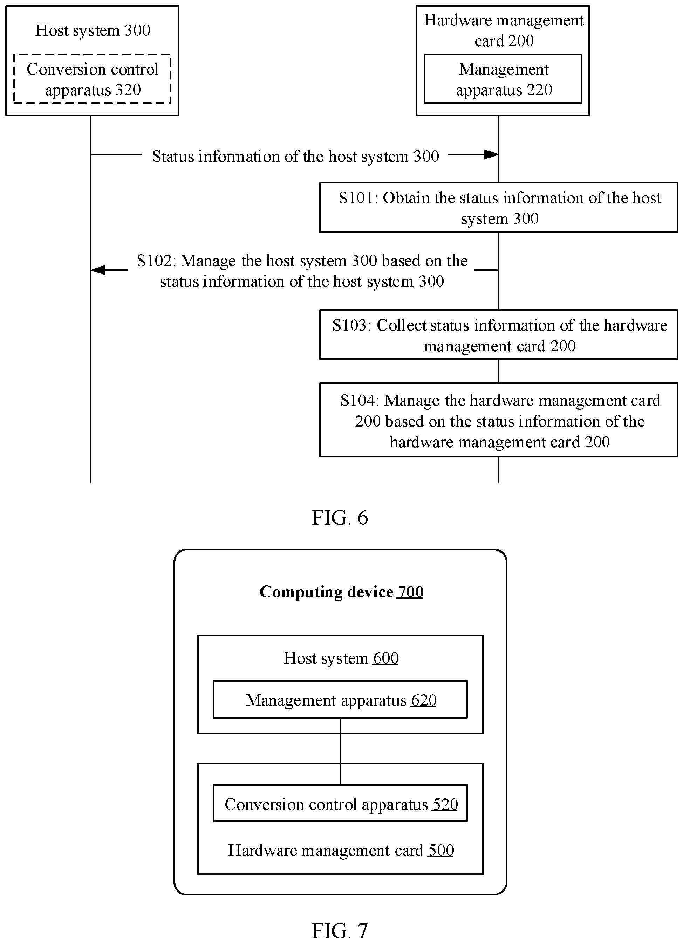

With reference to a management method of a computing device shown in FIG. 6, the following describes in detail how the computing device 100 configured with the hardware management card 200 implements management.

S101: The management apparatus 220 obtains status information of the host system 300.

The status information of the host system 300 includes status information of each piece of software and hardware in the host system 300. The status information of the software in the host system 300 indicates a status of the software in the host system 300, for example, whether the software in the host system 300 is in a running state, or whether an exception occurs during running of the software in the host system 300. The status information of the software in the host system 300 includes but is not limited to one or more of the following: whether the software is successfully installed, a reason for a software installation failure, a type of the software, a version of the software, a size of the software, whether the software runs normally, a reason for a software running failure, a use frequency of the software, and whether the software needs to be upgraded. The status information of the hardware in the host system 300 indicates performance of the hardware in the host system 300, a health status of the hardware in the host system 300, or performance of the hardware and a health status of the hardware in the host system 300. The performance of the hardware in the host system 300 is a state shown when the hardware operates, for example, power consumption or an operating voltage. The health status of the hardware in the host system 300 indicates availability of the hardware. For example, when a health status of a specific piece of hardware in the host system 300 is normal, it indicates that the hardware is available; or when a health status of a specific piece of hardware in the host system 300 is abnormal, it indicates that the hardware is faulty (that is, the hardware is unavailable), or is in a subhealth state (that is, the hardware is available but has poor performance). The status information of the hardware in the host system 300 includes but is not limited to one or more of the following: whether the hardware runs normally, a reason why the hardware is faulty, a model of the hardware, power consumption of the hardware, an operating voltage of the hardware, an operating current of the hardware, a temperature at which the hardware operates, and whether the hardware is in an idle state.

In some embodiments, if the host system 300 includes the conversion control apparatus 320, the management apparatus 220 may obtain the status information of the host system 300 through the conversion control apparatus 320. Specifically, the management apparatus 220 accesses, through the conversion control apparatus 320, a plurality of pieces of hardware that are in the host system 300 and connected to the conversion control apparatus 320, to obtain the status information of the host system 300. For example, it can be learned from FIG. 5 that the conversion control apparatus 320 is connected to both the first processor 340 and the heat dissipation apparatus 380. In this case, the management apparatus 220 may access the first processor 340 and the heat dissipation apparatus 380 through the conversion control apparatus 320, and obtain status information of the first processor 340 (for example, a current temperature of the first processor 340) and status information of the heat dissipation apparatus 380 (for example, a rotation speed signal of the fan).

It should be understood that the software in the host system 300 is run by the hardware in the host system 300. Therefore, the management apparatus 220 can access the hardware in the host system 300 to obtain the status information of the software in the host system 300. For example, the management apparatus 220 accesses the first memory 330 and the first processor 340 in the host system 300, and can determine a size of a specific piece of software that is currently run by the first processor 340. For another example, the management apparatus 220 determines a quantity of times that the first processor 340 in the host system 300 executes a specific piece of software, and can determine a use frequency of the software.

It should be noted that when the conversion control apparatus 320 is an apparatus of a different type, a process in which the management apparatus 220 obtains the status information of the host system 300 through the conversion control apparatus 320 is different. Specifically, when the conversion control apparatus 320 includes at least one second communication interface and a third communication interface, the conversion control apparatus 320 may be understood as an interface. One side of the interface is connected to the plurality of pieces of hardware in the host system 300, and the other side of the interface is connected to the management apparatus 220. Therefore, the management apparatus 220 may access, through the interface (that is, the conversion control apparatus 320), the plurality of pieces of hardware that are in the host system 300 and connected to the conversion control apparatus 320, to obtain the status information of the host system 300. When the conversion control apparatus 320 includes a second processor and a second memory, the management apparatus 220 may send an information collection instruction to the conversion control apparatus 320. After receiving the information collection instruction, the conversion control apparatus 320 accesses each piece of hardware that is connected to the conversion control apparatus 320 and that is in the host system 300, obtains the status information of the host system 300, and then sends the collected status information of the host system 300 to the management apparatus 220. In addition, when the conversion control apparatus 320 includes a second processor and a second memory, the conversion control apparatus 320 may alternatively collect the status information of the host system 300 in real time or at preset time, and send the collected status information of the host system 300 to the management apparatus 220.

In some other embodiments, if the host system 300 does not include the conversion control apparatus 320, that is, the management apparatus 220 obtains the status information of the host system 300 in the manner shown in FIG. 4, the management apparatus 220 may access a plurality of pieces of hardware in the host system 300 through a plurality of communication interfaces (including a plurality of first communication interfaces 210 in the hardware management card 200 and a plurality of first communication interfaces 310 in the host system 300), to obtain the status information of the host system 300.

S 102: The management apparatus 220 manages the host system 300 based on the status information of the host system 300.

In some embodiments, that the management apparatus 220 manages the host system 300 based on the status information of the host system 300 includes that the management apparatus 220 manages at least one of the software in the host system 300 and the hardware in the host system 300 based on the status information of the host system 300. Specifically, the management apparatus 220 determines, based on the status information of the host system 300, whether an exception occurs in each piece of software and hardware in the host system 300; and when an exception occurs in a specific piece of software or hardware in the host system 300, performs corresponding adjustment on the host system 300 based on the exception, to ensure normal running of the host system 300. For example, the status information of the host system 300 includes that a specific segment of program code is insecure. In this case, the management apparatus 220 determines that the segment of program code is abnormal, and stops executing the segment of program code. For another example, when the status information of the host system 300 includes that a version of a specific piece of software does not meet a requirement, the management apparatus 220 may obtain an upgrade compressed package of the software, indicate related hardware to stop running the software, and after an upgrade of the software is completed, indicate the processor to run the upgraded software. For another example, the status information of the host system 300 includes the current temperature of the first processor 340. When the current temperature of the first processor 340 is greater than a threshold, the management apparatus 220 determines that the first processor 340 is in an abnormal state. In this case, the management apparatus 220 may send, to the heat dissipation apparatus 380 through the conversion control apparatus 320, an instruction for increasing the rotation speed of the fan, to reduce the temperature of the first processor 340. For another example, the status information of the host system 300 includes that the fan in the heat dissipation apparatus 380 cannot rotate. In this case, the management apparatus 220 determines that the heat dissipation apparatus 380 is in an abnormal state, and sends a reset instruction to the heat dissipation apparatus 380 through the conversion control apparatus 320, to restart the heat dissipation apparatus 380.

Further, during actual application, not all exceptions that occur in the host system 300 can be resolved by the management apparatus 220 through adjustment. Therefore, it is proposed in this embodiment of this application that the management apparatus 220 records an exception in the host system 300 and a location at which the exception occurs, and sends alarm information to notify related personnel for maintenance.

S103: The management apparatus 220 collects status information of the hardware management card 200.

The status information of the hardware management card 200 includes status information of each piece of software and hardware in the hardware management card 200. Similar to the status information of the software in the host system 300, the status information of the software in the hardware management card 200 indicates a status of the software in the hardware management card 200, for example, whether the software in the hardware management card 200 is in a running state, or whether an exception (such as an infinite loop) occurs during running of the software in the hardware management card 200. The status information of the software in the hardware management card 200 includes but is not limited to one or more of the following: whether the software is successfully installed, a reason for a software installation failure, a type of the software, a version of the software, a size of the software, whether the software runs normally, a reason for a software running failure, a use frequency of the software, and whether the software needs to be upgraded. Similar to the status information of the hardware in the host system 300, the status information of the hardware in the hardware management card 200 indicates performance of the hardware in the hardware management card 200, a health status of the hardware in the hardware management card 200, or performance of the hardware and a health status of the hardware in the hardware management card 200. The performance of the hardware in the hardware management card 200 is a state shown when the hardware operates, for example, power consumption or an operating voltage. The health status of the hardware in the hardware management card 200 indicates availability of the hardware. For example, when a health status of a specific piece of hardware in the hardware management card 200 is normal, it indicates that the hardware is available; or when a health status of a specific piece of hardware in the hardware management card 200 is abnormal, it indicates that the hardware is faulty (that is, the hardware is unavailable), or is in a subhealth state (that is, the hardware is available but has poor performance). The status information of the hardware in the hardware management card 200 includes but is not limited to one or more of the following: whether the hardware runs normally, a reason why the hardware is faulty, a model of the hardware, power consumption of the hardware, an operating voltage of the hardware, an operating current of the hardware, a temperature at which the hardware operates, and whether the hardware is in an idle state.

Specifically, the management apparatus 220 collects, through the bus 270, status information of each piece of hardware that is connected to the management apparatus 220 and that is in the hardware management card 200, to obtain the status information of the hardware management card 200. For example, it can be learned from FIG. 3 that the management apparatus 220 is connected to both the first communication interface 210 and the second processor 240. In this case, the management apparatus 220 may access the first communication interface 210 and the second processor 240 through the bus 270, to obtain status information of the first communication interface 210 (for example, whether the first communication interface 210 is disabled), and status information of the second processor 240 (for example, whether the second processor 240 is in a running state).

It should be understood that the software in the hardware management card 200 is run by the hardware in the hardware management card 200. Therefore, the management apparatus 220 can access the hardware in the hardware management card 200 to obtain the status information of the software in the hardware management card 200. For example, the management apparatus 220 accesses the second memory 230 and the second processor 240 in the hardware management card 200, and can determine a size of a specific piece of software that is currently run by the second processor 240. For another example, the management apparatus 220 determines a quantity of times that the second processor 240 executes a specific piece of software, and can determine a use frequency of the software.

Optionally, this step and S101 may be exchanged in an execution sequence, or may be simultaneously performed.

S104: The management apparatus 220 manages the hardware management card 200 based on the status information of the hardware management card 200.

In some embodiments, that the management apparatus 220 manages the hardware management card 200 based on the status information of the hardware management card 200 includes that the management apparatus 220 manages at least one of the software in the hardware management card 200 and the hardware in the hardware management card 200 based on the status information of the hardware management card 200. Specifically, the management apparatus 220 determines, based on the status information of the hardware management card 200, whether an exception occurs in each piece of software and hardware in the hardware management card 200; and when an exception occurs in a specific piece of software or hardware in the hardware management card 200, performs corresponding adjustment on the hardware management card 200 based on the exception, to ensure normal running of the hardware management card 200. It should be understood that a specific implementation process of this step is similar to that of S102. For brevity, this step is not described by using an example herein again.

Further, during actual application, not all exceptions that occur in the hardware management card 200 can be resolved by the management apparatus 220 through adjustment. Therefore, it is proposed in this embodiment of this application that the management apparatus 220 records an exception in the hardware management card 200 and a location at which the exception occurs, and sends alarm information to notify related personnel for maintenance.

It should be noted that the management apparatus 220 stores a set of a root of trust, and the set of the root of trust is used to perform trusted management on the computing device 100. The trusted management performed by the root of trust on the computing device 100 includes one or more of the following aspects: trusted measurement and trusted boot.

A specific process of performing trusted measurement on the computing device 100 by using the root of trust includes: After the management apparatus 220 is powered on, a local root of trust is executed to perform trusted measurement on the management apparatus 220. After it is determined that the management apparatus 220 is trusted, because the management apparatus 220 may be connected to the hardware in the hardware management card 200 through the bus 270, next, the management apparatus 220 may be guided to perform trusted measurement on other program code executed by the hardware management card 200, for example, an operating system of the hardware management card 200 and an application program running in the hardware management card 200. Similarly, because the management apparatus 220 may be connected to the hardware in the host system 300 through the conversion control apparatus 320 or through the plurality of first communication interfaces 310, the management apparatus 220 may further be guided to perform trusted measurement on program code executed by the host system 300, for example, the operating system of the host system 300 and the application program running in the host system 300, to complete the trusted measurement on the computing device 100.

A specific process of performing trusted boot on the computing device 100 by using the root of trust includes: When trusted measurement is performed on a specific segment of program code in the computing device 100, if it is determined that the segment of program code does not meet a trusted requirement, further boot of the program code may be stopped, to complete the trusted boot on the computing device 100.

An embodiment of this application further provides another hardware management card. As shown in FIG. 7, compared with the hardware management card 200 shown in FIG. 1, a hardware management card 500 is configured with a conversion control apparatus 520, and is not configured with a management apparatus. A function of the conversion control apparatus 520 is similar to that of the conversion control apparatus 320 in the host system 300. The conversion control apparatus 520 is configured to enable a host system 600 to access hardware in the hardware management card 500, to manage the hardware management card 500. For a computing device 700 configured with the hardware management card 500, the host system 600 is configured with a management apparatus 620, and the management apparatus 620 may manage the hardware management card 500 as a component in the host system 600. In this way, the management apparatus 620 can be configured to manage the host system 600, and can be configured to manage the hardware management card 500. In addition, uniqueness of a root of trust in the computing device 700 can be ensured. This reduces management difficulty of the computing device 700.

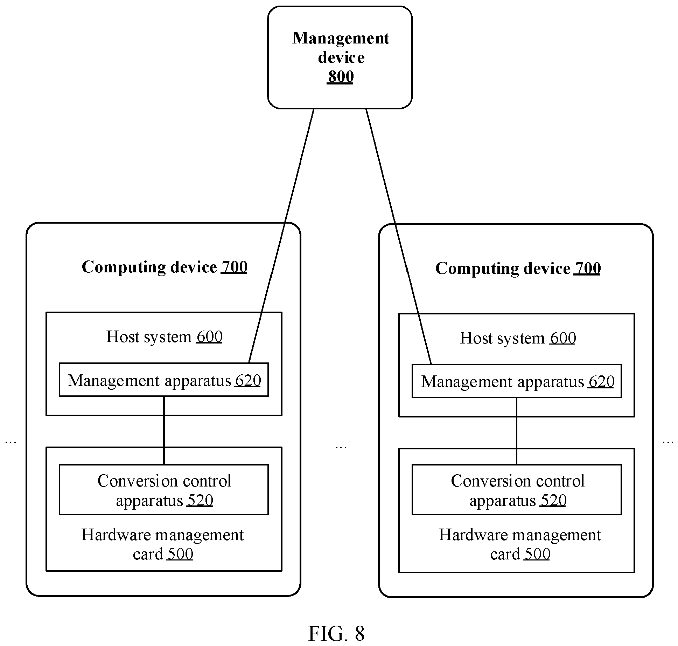

In this embodiment of this application, the computing device 700 may be a computing device in a cloud data center, a computing device in an edge data center, or a terminal computing device. Further, the computing device 700 may alternatively be a computing device in a computing device cluster. As shown in FIG. 8, the computing device cluster includes a plurality of computing devices 700 shown in FIG. 7 and a management device 800. The management device 800 may communicate with the plurality of computing devices 700, and the management device 800 manages each computing device 700 by using the management apparatus 620 on each computing device 700. In this way, management efficiency of the computing device cluster can be improved, and refined and high-accuracy management of the computing device 700 in the cluster can be implemented.

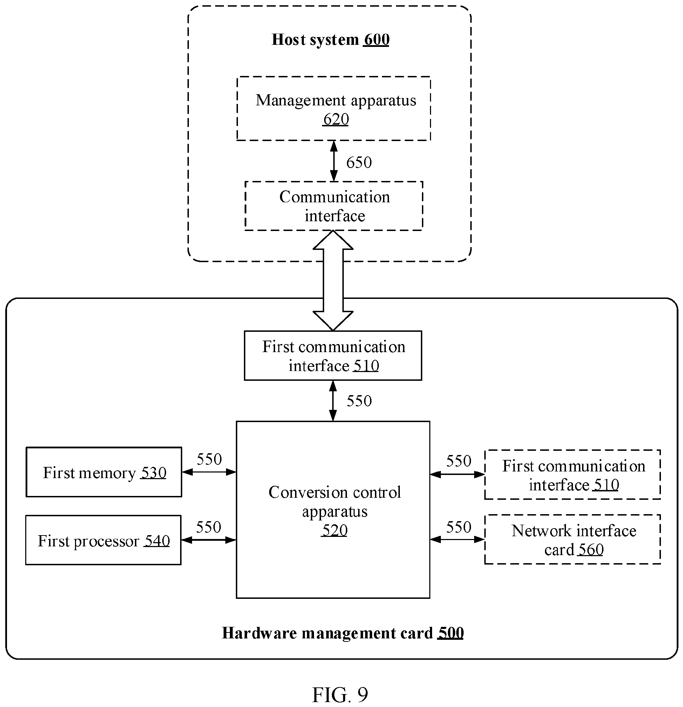

With reference to FIG. 9 to FIG. 12, the following describes in detail how the hardware management card 500 provided in this embodiment of this application can reduce management difficulty of the computing device 700.

FIG. 9 is an example of a diagram of a structure of the hardware management card 500. As shown in FIG. 9, the hardware management card 500 includes at least one first communication interface 510, a conversion control apparatus 520, a first memory 530, a first processor 540, and a bus 550.

The at least one first communication interface 510 uses an apparatus such as but not limited to a transceiver, for example, a wired communication interface and a wireless communication interface. The wired communication interface may be an Ethernet interface. The Ethernet interface may be an optical interface, an electrical interface, or a combination thereof. The wireless communication interface may be a WLAN interface, a cellular network communication interface, or a combination thereof.

The at least one first communication interface 510 includes a communication interface configured to connect to the host system 600. Through the interface, the host system 600 may manage the hardware management card 500, and may also offload, some performance (such as storage performance, network performance, or computing performance) in the host system 600 to the hardware management card 500, to reduce overheads of the host system 600.

Optionally, to implement high efficiency of communication between the hardware management card 500 and the host system 600, the at least one first communication interface 510 may include a PCIe interface and a CXL interface, or another customized interface specially configured to implement the communication between the hardware management card 500 and the host system 600.

Optionally, the at least one first communication interface 510 further includes a communication interface connected to another device. For example, the hardware management card 500 may further be connected to a network interface card 560. Therefore, the at least one first communication interface 510 may further include a communication interface connected to the network interface card 560.

The conversion control apparatus 520 is configured to enable the host system 600 to access a plurality of pieces of hardware in the hardware management card 500, to manage the hardware management card 500 (including managing the hardware in the hardware management card 500 and managing software in the hardware management card 500).

In some embodiments, the conversion control apparatus 520 may include at least one second communication interface and a third communication interface, for example, a hub controller. The at least one second communication interface is connected to the hardware in the hardware management card 500, may be configured to collect status information of the hardware in the hardware management card 500, and may also be configured to access the hardware in the hardware management card 500 to collect status information of the software in the hardware management card 500. The third communication interface is connected to a communication interface in the host system 600, and is configured to send, to the host system 600 through the at least one first communication interface 510, the status information that is in the hardware management card 500 and that is collected by the at least one second communication interface. In a specific implementation, a specific communication interface in the hardware management card 500 may be configured, so that the communication interface has a function of the conversion control apparatus 520.

In some other embodiments, the conversion control apparatus 520 includes a second processor and a second memory. The second memory stores program code, and the second processor is configured to read the program code in the second memory, to implement the function of the conversion control apparatus 520, that is, collecting status information of the hardware management card 500, and sending the collected information to the host system 600. In a specific implementation, the conversion control apparatus 520 may be a software apparatus, a hardware device, or a combination of a software apparatus and a hardware device. For example, the conversion control apparatus 520 may be a dedicated chip integrated into a mainboard of the hardware management card 500, for example, a microprocessor (such as an MCU). Alternatively, the function of the conversion control apparatus 520 is implemented by a CPU and a memory in the hardware management card 500, that is, the second processor is the CPU in the hardware management card 500, and the second memory is the memory of the CPU.

The first memory 530 may be an ROM or another type of static storage device that can store static information and instructions, an RAM or another type of dynamic storage device that can store information and instructions, an EEPROM or a flash memory, or a magnetic storage device such as an SSD, an HDD, or a compact disc read-only memory CD-ROM. The first memory 530 may be connected to the first processor 540 through the bus 550, or may be integrated with the first processor 540. The first memory 530 may store program code, for example, program code executed by the first processor 540. The first memory 530 may further store data, for example, intermediate data or result data, such as service data, generated by the first processor 540 in an execution process.

The first processor 540 may be a single-core processor or a multi-core processor, and may be specifically a CPU, a GPU, or a microprocessor, or may be one or more integrated circuits, for example, an ASIC, a PLD, or a combination thereof. The PLD may be a CPLD, an FPGA, a GAL, or any combination thereof. The first processor 540 is configured to read the program code in the first memory 530, to implement normal running of the hardware management card 500, for example, to implement a function (such as a computing function, a network function, a storage function, or a virtual machine management function) offloaded from the host system 600 to the hardware management card 500.

The bus 550 includes a path for transmitting information between the hardware in the hardware management card 500, for example, a bus between the first memory 530 and the first processor 540, a bus between the at least one first communication interface 510 and the first processor 540, and a bus between the conversion control apparatus 520 and each piece of hardware in the hardware management card 500. It should be understood that for brevity, FIG. 9 shows only the bus between the conversion control apparatus 520 and each piece of hardware in the hardware management card 500, and does not show a bus between other hardware or in the hardware.

Optionally, the hardware management card 500 may further include a network interface card 560. The network interface card 560 is configured to provide a network transmission capability for the hardware management card 500, so that the hardware management card 500 communicates with another device or a communication network by using a network. The network interface card 560 may include a wired network interface card, or may include a wireless network interface card. The network interface card 560 may be inserted into the hardware management card 500 through the first communication interface 510, or may be integrated into the hardware management card 500.

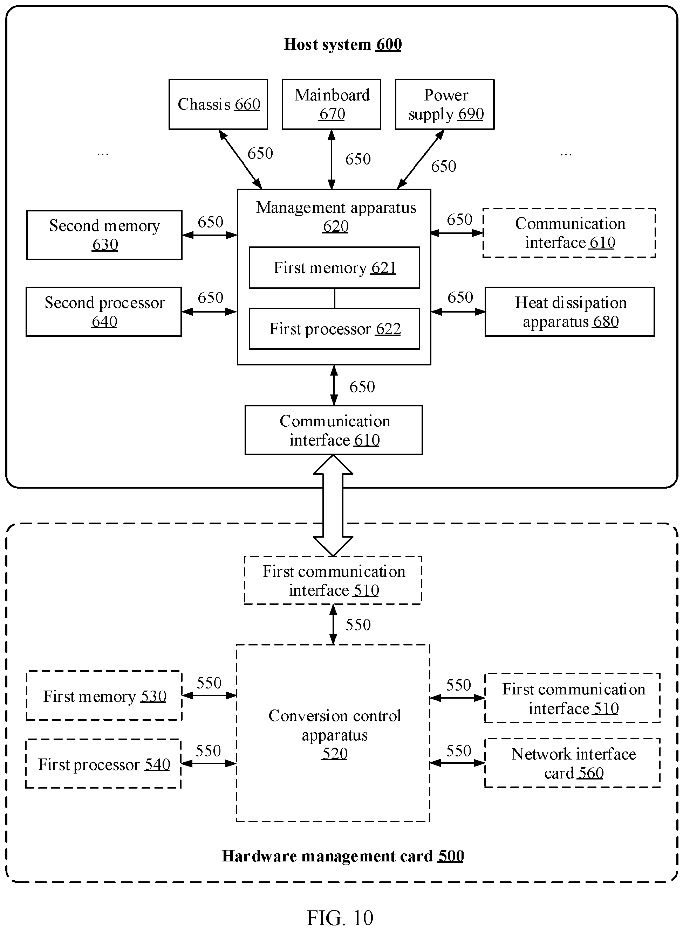

FIG. 10 is an example of a diagram of a structure of a host system 600 connected to a hardware management card 500. As shown in FIG. 10, the host system 600 includes at least one communication interface 610 and a management apparatus 620.

The at least one communication interface 610 uses an apparatus such as but not limited to a transceiver, for example, a wired communication interface and a wireless communication interface. The wired communication interface may be an Ethernet interface. The Ethernet interface may be an optical interface, an electrical interface, or a combination thereof. The wireless communication interface may be a WLAN interface, a cellular network communication interface, or a combination thereof.

The at least one communication interface 610 includes a communication interface configured to connect to the hardware management card 500. The host system 600 may offload, through the communication interface 610, some performance (such as storage performance, network performance, or computing performance) in the host system 600 to the hardware management card 500. In addition, as a communication interface for connecting to the hardware management card 500, the at least one communication interface 610 should use a same communication protocol as at least one first communication interface 510 corresponding to the hardware management card 500 side, that is, the communication interface 610 connected to the hardware management card 500 may include a PCIe interface, a CXL interface, or another customized interface specially configured to implement communication between the hardware management card 500 and the host system 600.

Optionally, the at least one communication interface 610 further includes a communication interface connected to another peripheral device. For example, the host system 600 may further be connected to a network interface card. Therefore, the at least one communication interface 610 may further include a communication interface connected to the network interface card.

The management apparatus 620 is configured to manage the hardware management card 500 through the conversion control apparatus 520, may specifically manage hardware in the hardware management card 500, and may further manage software in the hardware management card 500. The hardware in the hardware management card 500 includes but is not limited to the at least one first communication interface 510, the conversion control apparatus 520, the first memory 530, the first processor 540, the bus 550, and the network interface card 560 shown in FIG. 9. The software in the hardware management card 500 includes other program code, for example, an operating system and an application, that runs in the hardware management card 500.

Optionally, the management apparatus 620 is further configured to manage the host system 600, may specifically manage hardware in the host system 600, and may further manage software in the host system 600. The hardware in the host system 600 includes but is not limited to the at least one communication interface 610, and the software in the host system 600 includes program code, for example, an operating system and an application, that runs in the host system 600.

In some embodiments, the management apparatus 620 includes a first memory 621 and a first processor 622. The first memory 621 stores program code, and the first processor 622 is configured to read the program code in the first memory 621, to implement a function of the management apparatus 620.

Optionally, the first memory 621 may be an ROM or another type of static storage device that can store static information and instructions, an RAM or another type of dynamic storage device that can store information and instructions, a flash memory or an EEPROM, or a magnetic storage device such as an SSD, an HDD, or a CD-ROM. The first memory 621 may be connected to the first processor 622 through a bus, or may be integrated with the first processor 622. In addition to storing program code that needs to be executed by the first processor 622, the first memory 621 may be further configured to store data, for example, intermediate data or result data (for example, status information of a specific piece of hardware or software in the hardware management card 500, or status information of a specific piece of hardware or software in the host system 600) generated by the first processor 622 in an execution process.

Optionally, the first processor 622 may be a general-purpose CPU, a GPU, or a microprocessor, or may be one or more integrated circuits, for example, an ASIC, a PLD, or a combination thereof. The PLD may be a CPLD, an FPGA, a GAL, or any combination thereof.

In some embodiments, the management apparatus 620 may be a software apparatus, a hardware device, or a combination of a software apparatus and a hardware device. In a specific implementation, the management apparatus 620 may be a dedicated chip integrated into a mainboard of the host system 600, and has an independent memory and an independent processor, that is, the first memory 621 and the first processor 622, for example, a BMC. Alternatively, the function of the management apparatus 620 is implemented by a CPU and a memory in the host system 600, that is, the first processor 622 is the CPU, and the first memory 621 is the memory of the CPU.

In some embodiments, the management apparatus 620 stores a set of a root of trust, and the set of the root of trust is a segment of secure and reliable program code that is first executed after the management apparatus 620 is powered on. The root of trust in the management apparatus 620 is a unique root of trust used to perform trusted management (including trusted measurement and trusted boot) on the computing device 700.

Optionally, in addition to the at least one communication interface 610 and the management apparatus 620, the host system 600 may further include but is not limited to one or more pieces of the following hardware: a second memory 630, a second processor 640, a bus 650, a chassis 660, a mainboard 670, a heat dissipation apparatus 680, and a power supply 690.

The second memory 630 may be an ROM or another type of static storage device that can store static information and instructions, an RAM or another type of dynamic storage device that can store information and instructions, an EEPROM or a flash memory, or a magnetic storage device such as an SSD, an HDD, or a CD-ROM. The second memory 630 may be connected to the second processor 640 through the bus 650, or the second memory 630 may be integrated with the second processor 640. The second memory 630 may be configured to store program code that needs to be executed by the second processor 640. When the second processor 640 executes the program code in the second memory 630, normal running of a service can be implemented. The second memory 630 may further store data, for example, intermediate data or result data, such as service data, generated by the second processor 640 in an execution process.

The second processor 640 may be a general-purpose CPU, a GPU, or a microprocessor, or may be one or more integrated circuits, for example, an ASIC, a PLD, or a combination thereof. The PLD may be a CPLD, an FPGA, a GAL, or any combination thereof. In some embodiments, the second processor 640 may be a single-core processor, or may be a multi-core processor.

The bus 650 includes a path for transmitting information between the hardware in the host system 600, for example: a bus between the second memory 630 and the second processor 640, a bus between the at least one communication interface 610 and the second processor 640, and a bus between the management apparatus 620 and each piece of hardware (including the at least one communication interface 610, the second memory 630, the second processor 640, the bus 650, the chassis 660, the mainboard 670, the heat dissipation apparatus 680, and the power supply 690) in the host system 600. It should be understood that for brevity, FIG. 10 shows only the bus between the management apparatus 620 and each piece of hardware in the host system 600, and does not show a bus between the hardware or in the hardware.

For other hardware in the host system 600, the chassis 660 is a housing of the host system 600, and is configured to fasten each piece of hardware in the host system 600. The mainboard 670 is a body connected to each piece of hardware in the host system 600. The hardware in the mainboard 670 may include a CPU, a BIOS chip, an I/O control chip, a part of the communication interface 610, a part of the bus 650, and the like. The heat dissipation apparatus 680 is a device, for example, a fan, configured to dissipate heat for high-temperature hardware in the host system 600. The power supply 690 is a power supply system of the host system 600, and is configured to supply power to and stabilize a voltage of the host system 600. Generally, the chassis 660, the heat dissipation apparatus 680, and the power supply 690 are hardware connected to the mainboard 670. It should be understood that FIG. 10 shows only some hardware in the host system 600. During actual application, the host system 600 may further include other hardware, for example, a CD-ROM drive or a network interface card.

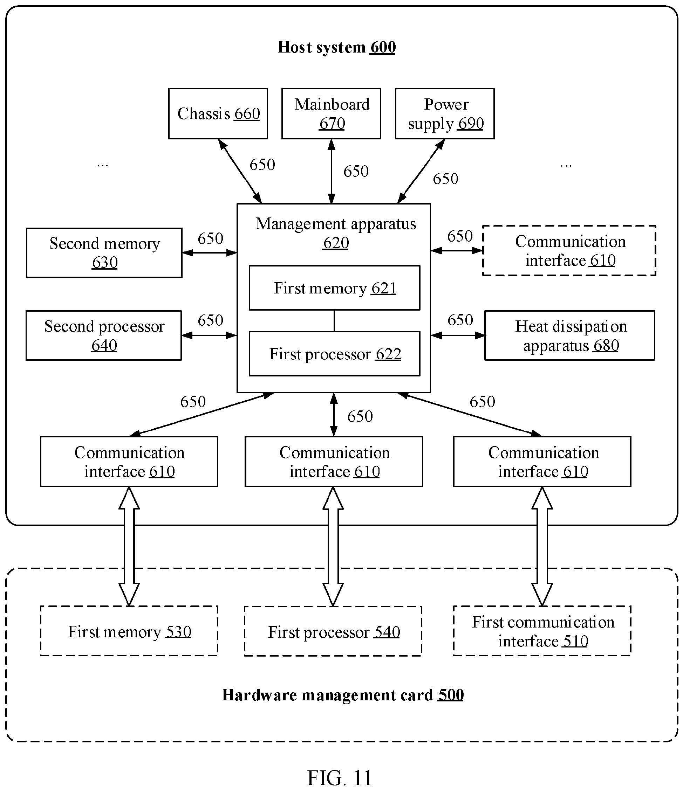

In a specific implementation, in another embodiment, as shown in FIG. 11, the host system 600 may further be directly connected to a plurality of pieces of hardware in the hardware management card 500 through a plurality of communication interfaces (including a plurality of first communication interfaces 510 and a plurality of communication interfaces 610). In this way, the hardware management card 500 may not need to be configured with the conversion control apparatus 520. However, compared with the connection manner shown in FIG. 10, this manner needs to occupy more communication interfaces.

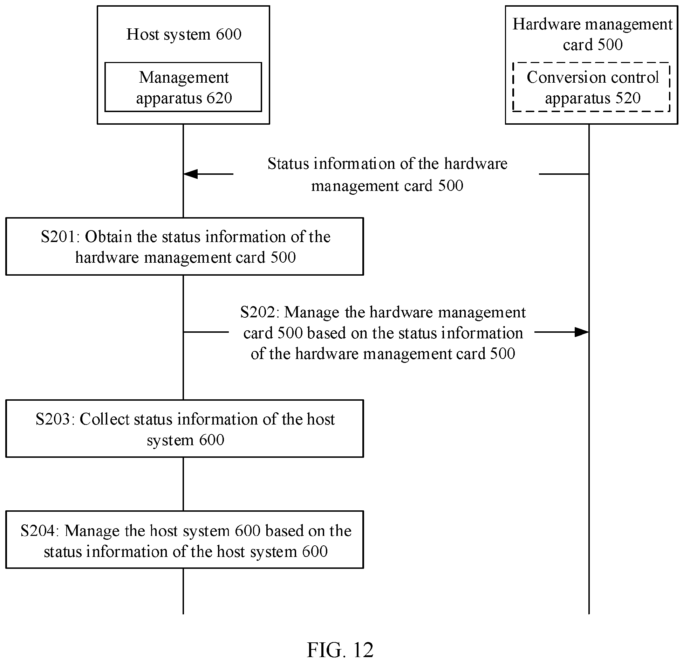

With reference to a management method of a computing device shown in FIG. 12, the following describes in detail how the computing device 700 configured with the hardware management card 500 implements management.

S201: The management apparatus 620 obtains status information of the hardware management card 500.

A definition of the status information of the hardware management card 500 is consistent with that of the status information of the hardware management card 200. Therefore, for brevity, details are not described herein again.

In some embodiments, if the hardware management card 500 includes the conversion control apparatus 520, the management apparatus 620 may obtain the status information of the hardware management card 500 through the conversion control apparatus 520. Specifically, the management apparatus 620 accesses, through the conversion control apparatus 520, a plurality of pieces of hardware that are in the hardware management card 500 and connected to the conversion control apparatus 520, to obtain the status information of the hardware management card 500.

It should be noted that when the conversion control apparatus 520 is an apparatus of a different type, a process in which the management apparatus 620 obtains the status information of the hardware management card 500 through the conversion control apparatus 520 is different. Specifically, when the conversion control apparatus 520 includes at least one second communication interface and a third communication interface, the conversion control apparatus 520 may be understood as an interface. One side of the interface is connected to the plurality of pieces of hardware in the hardware management card 500, and the other side of the interface is connected to the management apparatus 620. Therefore, the management apparatus 620 may access, through the interface (that is, the conversion control apparatus 520), the plurality of pieces of hardware that are in the hardware management card 500 and connected to the conversion control apparatus 520, to obtain the status information of the hardware management card 500. When the conversion control apparatus 520 includes a second processor and a second memory, the management apparatus 620 may send an information collection instruction to the conversion control apparatus 520. After receiving the information collection instruction, the conversion control apparatus 520 accesses each piece of hardware that is connected to the conversion control apparatus 520 and that is in the hardware management card 500, obtains the status information of the hardware management card 500, and then sends the collected status information of the hardware management card 500 to the management apparatus 620. In addition, when the conversion control apparatus 520 includes a second processor and a second memory, the conversion control apparatus 520 may alternatively collect the status information of the hardware management card 500 in real time or at preset time, and send the collected status information of the hardware management card 500 to the management apparatus 620.

In some other embodiments, if the hardware management card 500 does not include the conversion control apparatus 520, that is, the management apparatus 620 obtains the status information of the hardware management card 500 in the manner shown in FIG. 11, the management apparatus 620 may directly access a plurality of pieces of hardware in the hardware management card 500 through a plurality of communication interfaces (including a plurality of first communication interfaces 510 in the hardware management card 500 and a plurality of communication interfaces 610 in the host system 600), to obtain the status information of the hardware management card 500.

S202: The management apparatus 620 manages the hardware management card 500 based on the status information of the hardware management card 500.

In some embodiments, that the management apparatus 620 manages the hardware management card 500 based on the status information of the hardware management card 500 includes that the management apparatus 620 manages at least one of the software in the hardware management card 500 and the hardware in the hardware management card 500 based on the status information of the hardware management card 500. Specifically, the management apparatus 620 determines, based on the status information of the hardware management card 500, whether an exception occurs in each piece of software and hardware in the hardware management card 500; and when an exception occurs in a specific piece of software or hardware in the hardware management card 500, performs corresponding adjustment on the hardware management card 500 based on the exception, to ensure normal running of the hardware management card 500.

Further, during actual application, not all exceptions that occur in the hardware management card 500 can be resolved by the management apparatus 620 through adjustment. Therefore, it is proposed in this embodiment of this application that the management apparatus 620 records an exception in the hardware management card 500 and a location at which the exception occurs, and sends alarm information to notify related personnel for maintenance.

S203: The management apparatus 620 collects status information of the host system 600.

Specifically, the management apparatus 620 collects, through the bus 650, status information of each piece of hardware that is connected to the management apparatus 620 and that is in the host system 600, to obtain the status information of the host system 600. A definition of the status information of the host system 600 is consistent with that of the status information of the host system 300. Therefore, for brevity, details are not described herein again.

Optionally, this step and S201 may be exchanged in an execution sequence, or may be simultaneously performed.

S204: The management apparatus 620 manages the host system 600 based on the status information of the host system 600.

In some embodiments, that the management apparatus 620 manages the host system 600 based on the status information of the host system 600 includes that the management apparatus 620 manages at least one of the software in the host system 600 and the hardware in the host system 600 based on the status information of the host system 600. Specifically, the management apparatus 620 determines, based on the status information of the host system 600, whether an exception occurs in each piece of software and hardware in the host system 600; and when an exception occurs in a specific piece of software or hardware in the host system 600, performs corresponding adjustment on the host system 600 based on the exception, to ensure normal running of the host system 600.

Further, during actual application, not all exceptions that occur in the host system 600 can be resolved by the management apparatus 620 through adjustment. Therefore, it is proposed in this embodiment of this application that the management apparatus 620 records an exception in the host system 600 and a location at which the exception occurs, and sends alarm information to notify related personnel for maintenance.

It should be noted that a process (that is, S201 to S204) in which the management apparatus 620 manages the hardware management card 500 and the host system 600 is similar to a process (that is, S101 to S104) in which the management apparatus 220 manages the hardware management card 200 and the host system 300. Therefore, S201 to S204 are not described in detail in this embodiment of this application. For details, refer to S101 to S104.

It should be further noted that similar to the management apparatus 220, the management apparatus 620 also stores a set of a root of trust, and the set of the root of trust is used to perform trusted management on the computing device 700. The trusted management performed by the root of trust on the computing device 700 includes one or more of the following aspects: trusted measurement and trusted boot.

A specific process of performing trusted measurement on the computing device 700 by using the root of trust includes: After the management apparatus 620 is powered on, a local root of trust is executed to perform trusted measurement on the management apparatus 620. After it is determined that the management apparatus 620 is trusted, because the management apparatus 620 may be connected to the hardware in the host system 600 through the bus 650, next, the management apparatus 620 may be guided to perform trusted measurement on other program code executed by the host system 600, for example, an operating system of the host system 600 and an application program running in the host system 600. Similarly, because the management apparatus 620 may be connected to the hardware in the hardware management card 500 through the conversion control apparatus 520 or through the plurality of first communication interfaces 510, the management apparatus 620 may further be guided to perform trusted measurement on program code executed by the hardware management card 500, for example, an operating system of the hardware management card 500 and an application program running in the hardware management card 500, to complete the trusted measurement on the computing device 700.

A specific process of performing trusted boot on the computing device 700 by using the root of trust includes: When trusted measurement is performed on a specific segment of program code in the computing device 700, if it is determined that the segment of program code does not meet a trusted requirement, further boot of the program code may be stopped, to complete the trusted boot on the computing device 700.

The foregoing descriptions of procedures corresponding to the accompanying drawings have respective focuses. For a part of a procedure that is not described in detail, refer to related descriptions of another procedure.

All or some of the foregoing embodiments may be implemented by using software, hardware, or a combination thereof. When software is used to implement embodiments, all or some of the embodiments may be implemented in a form of a computer program product. The computer program product includes one or more computer program instructions. When the computer program instructions are loaded and executed on a computer, the procedures or functions according to embodiments of this application are all or partially generated.

The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer program code may be transmitted from a website, computer, server, or data center to another website, computer, server, or data center in a wired (for example, a coaxial cable, an optical fiber, or a twisted pair) or wireless (for example, infrared, radio, or microwave) manner. The computer-readable storage medium stores computer program code. The computer-readable storage medium may be any usable medium accessible by a computer, or a data storage device, such as a server or a data center, integrating one or more media. The usable medium may be a magnetic medium (for example, a floppy disk, a hard disk, or a magnetic tape), an optical medium (for example, a compact disc), or a semiconductor medium (for example, an SSD).

## Claims

1. A hardware management card, comprising:
a communication interface, configured to connect to a host system, wherein the hardware management card is a device independent of the host system; and
a management apparatus, comprising a first processor and a first memory, wherein the first processor is configured to read program code in the first memory, to manage hardware in the host system, and the hardware in the host system comprises one or more of the following: a mainboard of the host system, hardware in the mainboard, and hardware that is in the host system and that is connected to the mainboard.

2. The hardware management card according to claim 1, wherein
the management apparatus is further configured to manage hardware in the hardware management card, wherein the hardware in the hardware management card comprises one or more of the following: the communication interface, a second processor, a second memory, and a network interface card.

3. The hardware management card according to claim 2, wherein
the second processor is configured to read program code in the second memory, to implement a function offloaded from the host system to the hardware management card, wherein the function does not comprise a function associated with management of the hardware in the host system and the hardware in the hardware management card.

4. The hardware management card according to any one of claims 1 to 3, wherein the management apparatus stores a root of trust, and the root of trust is used to perform trusted management on program code executed by the host system and program code executed by the hardware management card.

5. A host system, comprising:
a first communication interface, configured to connect to a hardware management card, wherein the hardware management card is a device independent of the host system; and
a conversion control apparatus, configured to offload, from the host system to the hardware management card, a function associated with management of hardware in the host system, wherein the hardware in the host system comprises one or more of the following: a mainboard of the host system, hardware in the mainboard, and hardware that is in the host system and that is connected to the mainboard.

6. The host system according to claim 5, wherein
the conversion control apparatus comprises at least one second communication interface and a third communication interface, the at least one second communication interface is connected to the hardware in the host system, the at least one second communication interface is configured to collect status information of the hardware in the host system, the third communication interface is connected to the first communication interface, and the third communication interface is configured to send the status information of the hardware in the host system to the hardware management card through the first communication interface.

7. The host system according to claim 5, wherein
the conversion control apparatus comprises a processor and a memory, and the processor is configured to: read program code in the memory, collect status information of the hardware in the host system, and send the status information of the hardware in the host system to the hardware management card.

8. A computing device, comprising the hardware management card according to any one of claims 1 to 4, and the host system according to any one of claims 5 to 7, wherein
the hardware management card is a device independent of the host system;
the host system is configured to offload, from the host system to the hardware management card, a function associated with management of hardware in the host system, wherein the hardware in the host system comprises one or more of the following: a mainboard of the host system, hardware in the mainboard, and hardware that is in the host system and that is connected to the mainboard; and
the hardware management card is configured to manage the hardware in the host system.

9. The computing device according to claim 8, wherein the management apparatus stores a root of trust, and the root of trust is used to perform trusted management on program code executed by the host system and program code executed by the hardware management card.

10. A management method of a computing device, wherein the method is applied to the hardware management card according to any one of claims 1 to 4, and comprises:
obtaining status information of hardware that is in a host system and that is connected to the hardware management card, wherein the hardware management card is a device independent of the host system, and the hardware in the host system comprises one or more of the following: a mainboard of the host system, hardware in the mainboard, and hardware that is in the host system and that is connected to the mainboard; and
managing the hardware in the host system based on the status information of the hardware in the host system.

11. A computer-readable storage medium, storing computer program code, wherein when the computer program code is executed by a computing device, the computing device performs the method according to claim 10.
